# DEMANDE DE BREVET EUROPEEN

(11) **EP 1 872 650 A1**
(43) Date de publication de la demande: **02.01.2008**
(21) Numéro de dépôt: 07290728.0
(22) Date de dépôt: 12.06.2007
(51) Int. Cl.: A01G 3/04, A01G 17/02

(54) **Tracteur taille haie**

(30) Priorité: 27.06.2006 FR 0605747
(71) Demandeur: COCHET S.A., 72130 Souge le Ganelon (FR)
(72) Inventeur: Cochet, Ludovic, 72130 Souge le Ganelon (FR)
(74) Mandataire: Eidelsberg, Olivier Nathan

(57) **Abrégé**

Ensemble taille-haie, comportant un mât (3) de base, destiné à être solidaire d'un tracteur, et un lamier comportant au moins un disque (6) de coupe, est caractérisé en ce qu'il est prévu une flèche montée entre le mât et le lamier, la flèche étant montée à pivotement sur le mât, tandis que le lamier est monté, avec possibilité de pivotement relatif, sur la flèche, et il est prévu des moyens (11, 12, 13) de maintien destinés à faire en sorte que l'axe de coupe du lamier reste sensiblement parallèle à l'axe du mât de base pendant son déplacement de coupe.

## Description

La présente invention se rapporte à un ensemble formant taille-haie ainsi qu'à un élément formant tracteur ou micro-tracteur comportant un ensemble taille-haie.

On connaît déjà dans l'art antérieur des micro-tracteurs comportant un ensemble taille-haie. L'ensemble taille-haie est disposé à l'avant ou à l'arrière du véhicule micro-tracteur. Ce type de dispositif présente soit l'inconvénient de rendre difficile le contrôle du travail de coupe par le conducteur du micro-tracteur et d'avoir une mauvaise stabilité, notamment pendant le travail de coupe soi-même.

La présente invention vise à surmonter les inconvénients de l'art antérieur en proposant un ensemble taille-haie qui, lorsqu'il est utilisé sur un micro-tracteur, permet d'assurer à la fois une excellente stabilité de l'ensemble, notamment pendant le travail de coupe et, d'autre part, permet au conducteur de bien contrôler son travail de coupe.

Suivant l'invention, un ensemble taille-haie est tel que défini à la revendication 1. Des perfectionnements sont décrits aux sous revendications.

On obtient ainsi un ensemble taille-haie particulièrement stable pendant la coupe, de sorte que l'on peut disposer cet ensemble taille-haie dans la partie avant latérale du micro-tracteur pour permettre dans le même temps au conducteur d'avoir un bon contrôle de son travail de coupe.

Suivant un mode de réalisation particulièrement préféré de l'invention, qui permet d'obtenir un système particulièrement stable, un ensemble suivant l'invention comportant un micro-tracteur et un ensemble taille-haie suivant l'invention est caractérisé en ce que l'ensemble taille-haie est monté sur le micro-tracteur sur un flanc de celui-ci.

On obtient ainsi un ensemble micro-tracteur ensemble taille-haie qui est, d'une part, très stable pour la coupe et, d'autre part, permet de disposer l'ensemble taille-haie devant le conducteur pour ainsi permettre un bon contrôle de la coupe.

Suivant un mode de réalisation préféré de l'invention, le mât, la flèche et le lamier sont disposés sensiblement dans un même plan vertical.

Suivant un mode de réalisation préféré de l'invention, les moyens de maintien, destinés à maintenir l'axe de coupe du lamier parallèle à l'axe du mât, sont constitués d'une première poulie montée fixe au point de pivot de la flèche sur le mât et une deuxième poulie mobile montée au niveau du pivot du lamier et de la flèche, une courroie crantée assurant la liaison entre les deux poulies.

Avec ce système à poulies fixe et mobile on s'assure que lors de la rotation de la flèche, l'axe de coupe du lamier reste toujours parallèle au mât et ce pour une rotation sur 360° de la flèche par rapport au mât.

On décrit maintenant uniquement à titre d'exemple et en se reportant au dessin un mode de réalisation de l'invention.

Au dessin :
la figure 1 représente un ensemble formé d'un micro-tracteur et d'un ensemble taille-haie suivant l'invention ;
la figure 2 est une vue à plus grande échelle de l'ensemble taille-haie de la figure 1 avec une rotation d'une trentaine de degrés de la flèche par rapport au mât; et
la figure 3 est une vue représentant différentes positions possibles de l'ensemble taille-haie lors de la rotation sur 360°de la flèche.

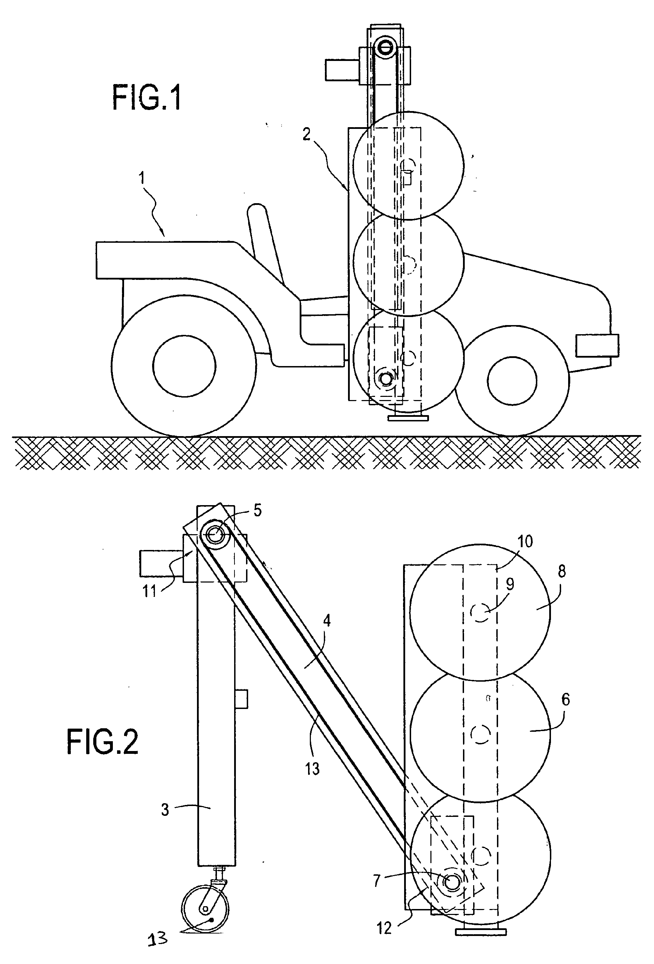

A la figure 1, un micro-tracteur 1 comporte, monté sur son flanc droit, en avant de la position de conduite, un ensemble taille-haie 2. L'ensemble taille-haie 2 est constitué d'un mât 3 monté verticalement sur le flanc du micro-tracteur 1 en étant solidaire en rotation du micro-tracteur, d'une flèche 4 montée sur le mât, rotative par rapport à un axe 5 de pivotement et un lamier 6 monté pivotant par rapport à la flèche 4 en un point pivot 7. La flèche 4 s'étend en ligne droite au moins du point pivot 7 jusqu'à l'axe 5 de pivotement, de sorte que la distance entre ces deux points 5 et 7 ne peut pas varier et est donc fixe.

Le lamier 6 est constitué de trois disques de coupe montés chacun rotatif par rapport à un axe 9 et qui comportent chacun deux lames (non représentées) qui sont montées pivotantes par rapport au disque et qui, lorsque celui-ci est entraîné en rotation, font saillie de la périphérie du disque pour former un élément coupant pouvant tailler les haies. Les trois centres 9 des disques 8 sont alignés suivant un axe 10, dit axe de lamier.

Suivant l'invention, l'agencement est tel que lors de la rotation de la flèche sur, par exemple, 360° par rapport au mât 3 et sur l'ensemble du domaine d'action de coupe du lamier, l'axe 10 de lamier reste sensiblement parallèle au mât 3.

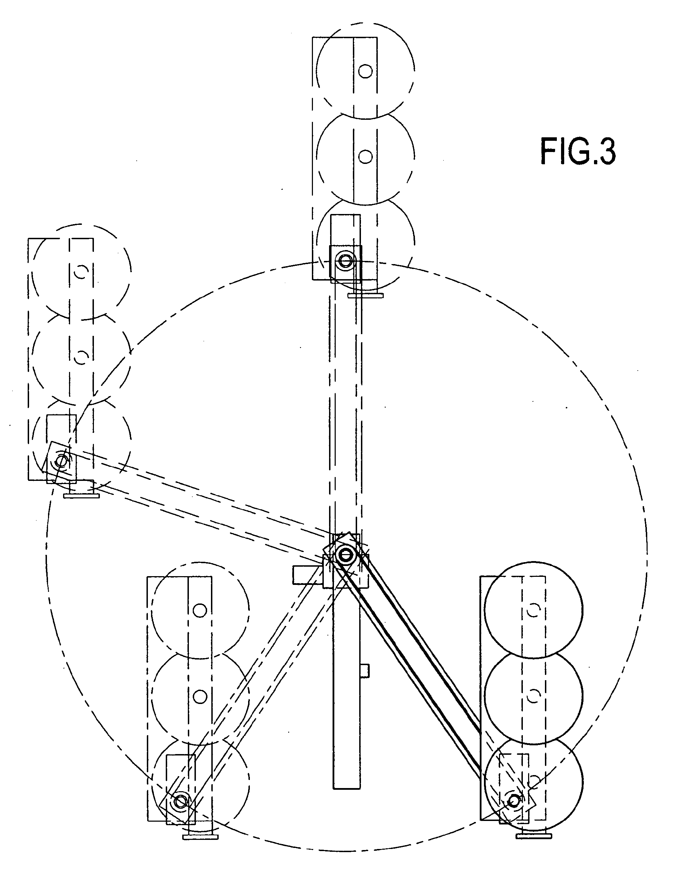

Pour ce faire, il est prévu des moyens de maintien du parallélisme du lamier avec le mât 3. Ces moyens de maintien du parallélisme sont constitués d'une première poulie 11 fixe par rapport au mât 3 et disposée au niveau de l'axe de pivot 5, d'une poulie 12 disposée au niveau de l'axe du pivot 7 et qui est fixe par rapport au lamier mais pivotante par rapport à la flèche. Une courroie 13 crantée réalise la liaison entre les deux poulies fixe et mobile. La flèche 4, le mât 3 et l'axe 10 de lamier se trouvent sensiblement dans un même plan vertical. Lorsque l'on fait pivoter la flèche 4 par rapport au pivot 5 du mât 3 sur 360°, le lamier a un mouvement de translation suivant une trajectoire circulaire, comme indiqué à la figure 3. Le lamier reste ainsi toujours parallèle au mât 3.

Le lamier suit, suivant un mouvement de translation, une trajectoire circulaire par rapport au cercle de centre l'axe 7 et de rayon la distance fixe de l'axe 7 au point pivot 5. On peut également prévoir que le mouvement ne soit possible que sur une partie du cercle, par exemple un arc de cercle de 180° uniquement.

On obtient ainsi un excellent équilibre de l'ensemble taille-haie lors de la coupe, ce qui permet de le disposer sur le flanc du tracteur.

Sous le mât 3, il peut être montée une roue 13 stabilisatrice (cette roue a été omise à la figure 1).

## Revendications

1. Ensemble taille-haie, comportant un mât (3) de base, destiné à être solidaire d'un tracteur, et un lamier (6) comportant au moins deux disque (8) de coupe définissant un axe (10) de coupe du lamier, **caractérisé en ce qu'**il est prévu une flèche (4) montée entre le mât (3) et le lamier (6), la flèche étant montée à pivotement sur le mât suivant un axe (5), tandis que le lamier est monté à pivotement sur la flèche en un point pivot (7), la distance entre l'axe (5) et le point pivot (7) étant fixe et il est prévu des moyens (11, 12, 13) de maintien destinés à faire en sorte que l'axe (10) de coupe du lamier peut suivre un déplacement en translation suivant une trajectoire comportant au moins un arc de cercle dont le centre est l'axe (5) et le rayon la distance de l'axe (5) au point pivot (7), en restant sensiblement parallèle au mât (3) pendant son déplacement.

2. Ensemble suivant la revendication 1, **caractérisé en ce qu'**il comporte également un micro-tracteur (1) **caractérisé en ce que** l'ensemble taille-haie est monté sur le micro-tracteur sur un flanc de celui-ci, notamment sensiblement au milieu du flanc.

3. Ensemble suivant la revendication 1 ou 2, **caractérisé en ce que** le mât, la flèche et le lamier sont disposés sensiblement dans un même plan vertical.

4. Ensemble suivant la revendication 1, 2 ou 3, **caractérisé en ce que** les moyens de maintien de parallélisme, destinés à maintenir l'axe de coupe du lamier parallèle à l'axe du mât, sont constitués d'une première poulie (11) montée fixe sur le mât, au point de pivot de la flèche, et une deuxième poulie (12) montée au niveau du pivot du lamier et de la flèche, une courroie crantée assurant la liaison entre les deux poulies, la deuxième poulie (12) étant montée fixe par rapport au lamier et pivotante par rapport à la flèche.

5. Ensemble suivant l'une des revendications précédentes, **caractérisé en ce qu'**il est prévu une roue stabilisatrice supportant le mât (3).
